# FASCICULE DE BREVET EUROPEEN

(11) **EP 0 630 577 B1**
(45) Date de publication et mention de la délivrance du brevet: **28.10.1998**
(21) Numéro de dépôt: 94109136.5
(22) Date de dépôt: 15.06.1994
(51) Int. Cl.: A23K 1/16, A23K 1/18

(54) **Composition pour ameliorer la digestibilité des aliments destinés aux animaux ruminants**
Zusammensetzung, die die Verdaulichkeit des Futter für Wiederkäuer verbessert
Composition improving the digestibility of ruminant feed

(30) Priorité: 22.06.1993 CH 1876/93
(43) Date de publication de la demande: 28.12.1994
(73) Titulaire: CRINA S.A., CH-1196 Gland (CH)
(72) Inventeur: Rossi, Jean, CH-1293 Bellevue (CH)
(74) Mandataire: Micheli & Cie

(56) Documents cités:
- FR-A- 2 510 875
- GB-A- 1 360 228
- US-A- 3 171 745
- US-A- 3 293 038
- PATENT ABSTRACTS OF JAPAN vol. 17, no. 247 (C-1059) 18 Mai 1993 & JP-A-05 000 051 (TAIYO KAGAKU CO LTD) 8 Janvier 1993
- CANADIAN JOURNAL OF ANIMAL SCIENCE, vol.71, no.4, 1991, CA pages 1187 - 1196 J.W.G. NICHOLSON ET AL. 'Herring silage as a protein supplement for young cattle'
- AGRICULTURAL WASTES, vol.13, no.4, 1985, GB pages 315 - 317 S.S. SIKKA ET AL. 'Evaluation in vitro od spent coffee grounds as alivestock feed'
- THE BRITISH JOURNAL OF NUTRITION, vol.49, no.1, 1983, GB pages 87 - 99 A.K. MARTIN ET AL. 'The origin of urinary aromatic acid and phenol outputs excreted by ruminants. 4. The potential use of urine aromatic acid and phenol outputs as a measure of voluntary food intake'
- WEBSTER

## Description

La présente invention se rapporte à une composition pour améliorer la digestibilité des aliments destinés aux animaux ruminants. Cette composition peut se présenter notamment sous la forme d'un mélange concentré destiné à être incorporé comme additif dans les aliments usuels pour les ruminants.

Chez les ruminants, il est important pour la digestibilité des aliments que les matières organiques (protéine et amidon notamment) ne soient pas trop dégradées au niveau du rumen, mais que les nutriments soient transférés dans l'intestin grêle sous une forme moins dégradée, afin d'être soumis à une digestion enzymatique moins coûteuse energétiquement puisqu'elle permet une production accrue d'adénosine-triphosphate (ATP).

Le document GB-A-1360228 décrit une composition stable pour animaux. Le document "Patent Abstacts of Japan, vol. 17, no. 247 (C-1059) 18/5/93" décrit un additif alimentaire pour animaux.

Le document "The British Journal of Nutrition, vol. 49, no. 1, 1983, GB, pages 87-99, A. K. Martin et al." décrit aussi un aliment pour ruminants.

Le but de la présente invention consiste à fournir une composition destinée à être incorporée aux aliments pour animaux ruminants et qui permette d'améliorer sensiblement la digestibilité de ceux-ci et par conséquent de favoriser également la croissance des ruminants ingérant de tels aliments.

La composition selon l'invention visant à atteindre le but précité comporte à titre d'ingrédient actif un dérivé aromatique phénolique choisi parmi les crésols et les benzènediols.

En effet, les présents inventeurs ont constaté de manière inattendue que l'effet actif souhaité sur la digestibilité était obtenue par l'utilisation d'un dérivé aromatique phénolique, plus particulièrement d'un crésol ou d'un benzènediol, notamment le résorcinol (m-benzènediol), ou d'un mélange de ceux-ci.

D'autre part, ils ont également constaté que le transfert de nutriments moins dégradés dans l'intestin grêle, grâce à la composition selon l'invention, présentait un autre avantage chez les vaches laitières, à savoir la réduction de la quantité de toxines azotées résultant de la dégradation microbienne, toxines qui entraînent une inflammation des mamelles. Cette inflammation est combattue par une réaction immunologique entraînant dans le lait une augmentation importante de la quantité des leucocytes appelés "cellules somatiques". Or, ces cellules somatiques constituent un inconvénient en fromagerie et, pour cette raison, les laits riches en cellules somatiques sont payés moins chers au producteur.

De préférence, les dérivés aromatiques phénoliques sont incorporés dans l'alimentation des animaux de telle sorte que ces dérivés soient consommés à raison de 1 à 100 mg environ par animal et par jour selon le poids des animaux.

Les compositions selon l'invention destinées à être incorporées à l'alimentation animale usuelle peuvent comporter un support absorbant et un mélange aromatique, auxquelles est incorporé l'ingrédient actif. Par exemple, les proportions pouront être les suivantes:
de 5 à 10% de dérivé phénolique,
de 20 à 30% d'un mélange aromatique,
et de 60 à 75% d'un support absorbant.
Comme dérivé phénolique, on utilise de préférence le crésol ou le résorcinol, ou un mélange de ceux-ci, par exemple contenant de 60 à 90% de crésol et de 10 à 40% de résorcinol.

A titre d'exemple, on peut citer les compositions suivantes du support absorbant et du mélange aromatique.

| (a) Support absorbant : | |
|---|---|
| Sciure de sapin stérilisée | 40 - 50% |
| Stéarine | 8 - 10% |
| Poudre de curcuma | 4 - 5% |
| Poudre de romarin | 4 - 5% |
| Chaux fourragère | 22 - 28% |
| Gomme arabique | env. 2% |
| Eau | env. 10% |

| (b) Mélange aromatique : | |
|---|---|
| Thymol | 25 - 35% |
| Guaïacol | 10 - 15% |
| Eugénol | 5 - 10% |
| Vanilline | 10 - 20% |
| Salicylaldéhyde | 5 - 10% |
| Limonène (solvent) | 20 - 35% |

En pratique, le crésol et/ou le résorcinol sont ajoutés au mélange aromatique liquide, puis ce nouveau mélange est incorporé au support absorbant par exemple dans un mélangeur à farine.

Pour sa consommation par les animaux, la composition selon l'invention doit être en principe diluée, cette dilution étant généralement effectuée en deux phases; la première consiste en la préparation d'un mélange concentré ou "prémix", dans lequel la composition selon l'invention est diluée à raison de 0,5 à 5%, et qui est ensuite dans une seconde phase mélangé à un aliment pour animaux de type usuel.

A titre d'exemple, le mélange concentré ou "prémix" peut présenter la composition suivante:

| | |
|---|---|
| Composition selon l'invention | 0,3 - 3% |
| Mélange de vitamines (A,B,D,E, acide nicotinique, etc) | 0,1 - 1% |
| Sels minéraux (CaHPO₄, CaCO₃, NaCl, CuO, MnO, FeSO₄, ZnO, etc.) | 25 - 75% |
| Issues de meunerie, (son, farine fourragère, etc.) | 21 - 75% |

Toujours à titre d'exemple uniquement, le prémix mentionné ci-dessus peut être incorporé à un aliment pour donner la préparation suivante:

| | |
|---|---|
| Prémix selon l'invention | 0,3 - 3,5% |
| Céréales et pois | env. 50% |
| Tourteaux (soja, colza, etc.) | env. 25% |
| Issues de meunerie | 21 - 25% |

Un tel aliment, contenant la composition selon l'invention, et consommé à raison de 2 à 10kg par animal et par jour, permet ainsi de distribuer des dosages quotidiens de 5 à 100 mg de crésols et de 1 à 50 mg de benzènediols.

Pour démontrer l'efficacité de la composition selon l'invention, trois essais expérimentaux ont été effectués, d'une part en ce qui concerne les effets dans le rumen, et d'autre part les effets sur la formation des cellules somatiques du lait et sur la croissance des animaux.

### Essai 1 : effets dans le rumen

Cet essai a été effectué "in vitro" selon la technique de Menke, en utilisant pour l'incubation :
(a) aliment contenant
   30% d'ensilage de maïs séché
   25% de foin déshydraté
   15% d'orge
   12,5% de maïs
   17,5% de farine d'extraction de soja
(b) jus de rumen provenant de 3 animaux équipés d'une fistule permanente du rumen; les animaux reçoivent l'aliment (a) et le jus est prélevé à jeun
c) le tampon Mac Dougall

L'incubation est poursuivie pendant 48 heures à 39°C, puis les différents métabolites représentatifs de la digestibilité dans le rumen sont déterminés après 6 et 48 heures.

Le test est répété 12 fois, ceci d'un part avec l'aliment seul (contrôle) et d'autre part avec l'aliment contenant la composition selon l'invention, plus particulièrement avec un prémix formé de 10% d'un mélange crésol-résorcinol (75%-25%), de 20% d'un mélange aromatique du type décrit précédement à titre d'exemple et 70% d'un support absorbant également correspondant à celui décrit à titre d'exemple.
Les résultats obtenus sont présentés dans le tableau ci-après :

| Tableau des résultats : | | | | |
|---|---|---|---|---|
| | Contrôle | | Aliment avec prémix selon l'inv. | |
| | 6h | 48h | 6h | 48h |
| (A) Protéine précipitable TCA (mg/100cm³) | 107,88 | 86,31 | 133,69 | 113,63 |
| (B) Azote ammoniacal (mg/100cm³) | 24,19 | 40,32 | 4,83 | 6,75 |
| (C) Acides volatiles totaux (mg/100cm³) | 58,85 | 188,14 | 41,46 | 131,40 |
| (D) Production des gaz (mg/100cm³) | 72 | 122 | 56 | 85 |
| (E) Substance sèche dégradée en % de la valeur initiale | -- | --- | 54,12 | 41,28 |
| (A) La valeur plus élevée pour l'aliment avec le prémix selon l'invention indique que la protéine alimentaire est mieux protégée. (B) La diminution importante de l'azote ammoniacal démontre que la protéine est mieux protégée et donc moins dégradée dans le rumen. (C) La diminution des acides volatiles totaux indique que l'amidon est mieux protégé. (D) La diminution de la production de gaz indique également que la matière organique alimentaire est moins dégradée, donc mieux protégée. | | | | |

Les résultats obtenus par cet essai montrent donc clairement que dans le cas de l'aliment contenant le prémix selon l'invention, la dégradation est réduite dans le rumen, ce qui améliore la digestibilité dudit aliment.

### Essai 2 : effet sur les cellules somatiques dans le lait

Le test a été effectué tout d'abord dans des conditions pratiques sur un troupeau de 46 vaches laitières dont les conditions sanitaires initiales étaient excellentes. La moitié du troupeau (contrôle) a reçu comme nourriture un aliment usuel, alors que l'autre moitié (test) a reçu un aliment auquel a été ajouté le prémix selon l'invention tel qu'il a été décrit précédemment à titre d'exemple. Après 6 semaines, le nombre de cellules somatiques du groupe de contrôle était de 113'200/cm³ de lait, alors que celui du groupe test était tombé à 99'900/cm³ de lait.

Un autre test a été effectué sur un troupeau de 50 vaches laitières dont l'état sanitaire initial était moyen, et dont le nombre de cellules somatiques était de 395'000/cm³ de lait. Après consommation d'une alimentation additionnée du prémix selon l'invention, ce nombre a diminué de la manière suivante:

| | |
|---|---|
| Après 1 semaine | 305'000/cm³ de lait |
| Après 3 semaines | 236'000/cm³ de lait |
| Après 5 semaines | 219'000/cm³ de lait |
| Après 6 semaines | 195'000/cm³ de lait |
| Après 7 semaines | 128'000/cm³ de lait |

Les résultats ci-dessus démontrent donc bien que la composition selon l'alimentation permet une réduction importante du catabolisme microbien.

### Essai 3 : effet sur la croissance des animaux

Ce test a été effectué pendant 35 jours dans des conditions pratiques d'élevage sur des bovins en croissance. Il a été réalisé sur deux groupes de 20 animaux, dont l'un (groupe de contrôle) a reçu une alimentation usuelle et l'autre (groupe test) a reçu un aliment complémentaire selon l'invention, tel que décrit à titre d'exemple précédemment, dosé de telle sorte à obtenir environ 100 mg d'ingrédient actif par 3,3 kg d'aliment complémentaire.

Les résultats obtenus sont les suivants :

| | Groupe contrôle | Groupe test |
|---|---|---|
| Poids moyen initial (kg) | 185,7 | 185,1 |
| Poids moyen final (kg) | 227,9 | 233,0 |
| Gain moyen quotidien (g) | 1'206 | 1'369 |

L'augmentation de la croissance constatée (+13,5% en moyenne) peut s'expliquer par l'amélioration de la digestibilité des aliments consommés grâce à l'incorporation de la composition selon l'invention.

## Revendications

1. Composition pour améliorer la digestibilité des aliments destinés aux animaux ruminants contenant comme ingrédient actif un dérivé aromatique phénolique, caractérisée par le fait qu'elle comporte de 5 à 10% d'un dérivé phénolique, choisi parmi les crésols, le résorcinol et un mélange de ceux-ci, de 20 a 30% d'un mélange aromatique et de 60 à 70% d un support absorbant.

2. Composition selon la revendication 1, dans laquelle ledit mélange de dérivés phénoliques comprend de 60 à 90% de crésol et de 10 à 40% de résorcinol.

3. Composition selon la revendication 1, dans laquelle le mélange aromatique comporte de 25 à 35% de thymol, de 10 à 15% de guaïacol, de 5 à 10% d'eugénol, de 10 à 20% de vanilline, de 5 à 10% de salicylaldéhyde et de 20 à 35% de limonène, et le support absorbant comporte de 40 à 50% de sciure de bois, de 8 à 10% de stéarine, de 4 à 5% de poudre de curcuma, de 4 à 5% de poudre de romarin, de 22 à 28% de chaux fourragère, environ 2% de gomme arabique et environ 10% d'eau.

4. Mélange concentré destiné à être incorporé aux aliments pour animaux ruminants qui comporte de 0,3 à 3% de la composition selon l'une des revendications 1 à 3.

5. Mélange selon la revendicaion 4, caractérisé par le fait qu'il comporte en outre de 0,1 à 1% d'un mélange de vitamies, de 25 à 75% de sels minéraux et de 21 à 75% d'issues de meunerie.

6. Aliment pour animaux ruminants comportant de 0,3 à 3,5% du mélange concentré selon la revendication 4.

7. Aliment selon la revendication 6, caractérisé par le fait qu'il comporte en outre environ 50% d'un mélange de céréales et de pois, environ 25% de tourteaux de céréales et de 21 à 25% d'issues de meunerie.

8. Aliment selon la revendication 6 ou la revendication 7, caractérisé par le fait qu'il contient de 1 à 100 mg de l'ingrédient actif selon la revendication 1 pour 2 à 10 kg dudit aliment.

## Claims

1. A composition for improving the digestibility of feed for ruminants containing as active ingredient an aromatic phenol derivative, characterized in that it contains from 5 to 10% of a phenol derivative selected among cresols, resorcinol and a mixture thereof, from 20 to 30% of an aromatizing mixture and from 60 to 70% of an absorbing support.

2. A composition according to claim 1, in which said mixture of phenolic derivatives contains from 60 to 90% of cresol and from 10 to 40% of resorcinol.

3. A composition according to claim 1, in which the aromatizing mixture contains from 25 to 35% thymol, from 10 to 15% guaiacol, from 5 to 10% eugenol, from 10 to 20% vanillin, from 5 to 10% salicylaldehyde and from 20 to 35% limonene, and the absorbing support contains from 40 to 50% of sawdust, from 8 to 10% stearin, from 4 to 5% curcuma powder, from 4 to 5% rosemary powder, from 22 to 28% limestone, approximately 2% arabic gum and approximately 10% water.

4. A concentrated mixture designed for incorporation into feed for ruminants which contains from 0,3 to 3% fo the composition according to one of claims 1 to 3.

5. A mixture according to claim 4, characterized in that it further contains from 0.1 to 1% of a mixture of vitamins, from 25 to 75% of mineral salts and from 21 to 75% of products of flour-milling.

6. A feed for ruminants containing from 0.3 to 3,5% of the concentrate mixtured according to claim 4.

7. A feed according to claim 6, characterized in that it further contains approximately 50% of a mixture of cereals and peas, approximately 25% of oilcake meal from cereals and 21 to 25% of products of flour-milling.

8. A feed according to claim 6 or claim 7, characterized in that it contains from 1 to 100mg of the active ingredient according to claim 1 for 2 to 10kg of said feed.

## Patentansprüche

1. Zusammensetzung zur Verbesserung der Verdaulichkeit des für Wiederkäuer bestimmten Futters mit einem phenolischen aromatischen Derivat als aktivem Bestandteil, dadurch gekennzeichnet, dass sie 5 bis 10 % eines unter den Kresolen, dem Resorcin und einer Mischung dieser Substanzen ausgewählten phenolischen Derivats, 20 bis 30 % eines aromatischen Gemischs und 60 bis 70 % eines absorbierenden Trägers enthält.

2. Zusammensetzung gemäss Anspruch 1, worin die benannte Mischung phenolischer Derivate 60 und 90 % Kresol und 10 und 40 % Resorcin enthält.

3. Zusammensetzung gemäss Anspruch 1, worin das aromatische Gemisch 25 bis 35 % Thymol, 10 bis 15 % Guajakol, 5 bis 10 % Eugenol, 10 bis 20 % Vanillin, 5 bis 10 % Salicylaldehyd und 20 bis 35 % Limonen, der absorbierende Träger 40 bis 50 % Sägemehl, 8 bis 10 % Stearin, 4 bis 5 % Kurkumapulver, 4 bis 5 % Rosmarinpulver, 22 bis 28 % Futterkalk, etwa 2 % Gummi arabicum und etwa 10 % Wasser enthält.

4. Zur Zumischung zu Wiederkäuerfutter bestimmtes Konzentrat mit 0,3 bis 3 % der Zusammensetzung gemäss einem der Ansprüche 1 bis 3.

5. Konzentrat gemäss Anspruch 4, dadurch gekennzeichnet, dass es ausserdem 0,1 bis 1 % eines Vitamingemischs, 25 bis 75 % Mineralsalze und 21 bis 75 % Kleie enthält.

6. Wiederkäuerfutter mit 0,3 bis 3,5 % des Konzentrats gemäss Anspruch 4.

7. Futter gemäss Anspruch 6, dadurch gekennzeichnet, dass es ausserdem etwa 50 % eines Gemischs aus Getreide und Erbsen, etwa 25 % Getreidekuchen und 21 bis 25 % Kleie enthält.

8. Futter gemäss Anspruch 6 oder Anspruch 7, dadurch gekennzeichnet, dass es 1 bis 100 mg des aktiven Bestandteils gemäss Anspruch 1 pro 2 bis 10 kg des benannten Futters enthält.
